# EUROPÄISCHE PATENTANMELDUNG

(11) **EP 3 248 759 A1**
(43) Veröffentlichungstag der Anmeldung: **29.11.2017**
(21) Anmeldenummer: 17172981.7
(22) Anmeldetag: 25.05.2017
(51) Int. Cl.: B29C 65/50, D04B 1/10

(54) **ROVING-GEWEBE, -GESTRICK ODER -GELEGE FÜR EINE KRAFTSCHLÜSSIGE VERBINDUNG VON MINDESTENS ZWEI KÖRPERN SOWIE VERFAHREN ZU DESSEN HERSTELLUNG**

(30) Priorität: 26.05.2016 DE 102016109746
(71) Anmelder: LASSO Ingenieurgesellschaft mbH, 70771 Leinfelden-Echterdingen (DE)
(72) Erfinder: Hindenlang, Ulrich, 70771 Leinfelden-Echterdingen (DE)
(74) Vertreter: Heisel, Wolfgang

(57) **Zusammenfassung**

Vorrichtung (1) zur kraftschlüssigen Verbindung von mindestens zwei Körpern (2,3), wobei die Körper in einem Winkel ungleich null zueinander angeordnet, wobei Rovings (9) durch entsprechende Anordnung einen Kraftverlauf von einem Körper zum anderen ermöglichen, wobei die Vorrichtung (1) ein Gewebe, Gestrick oder Gelege (8) aus Rovings (9) ist, das die lang gestreckt ist und eine Mittelachse (5) aufweist, wobei sich von der Mittelachse (5) Formteile (7) wegerstrecken und die Formteile (7) durch Anordnung der Rovings (9) gebildet sind, derart dass diese zumindest einen schlaufenartigen bauchigen Bereich aufweisen, der jeweils zur Anlage an die Oberfläche (4) der Körper (2, 3) vorgesehen ist und die jeweiligen Formteile zur Kraftübertragung kraftschlüssig miteinander verbunden sind.

## Beschreibung

### Technisches Gebiet

Die Erfindung bezieht sich auf eine Vorrichtung zur kraftschlüssigen Verbindung von mindestens zwei Körpern, wobei die Körper in einem Winkel ungleich null zueinander angeordnet, wobei Rovings durch entsprechende Anordnung einen Kraftverlauf von einem Körper zum anderen ermöglichen.

### Definition

Als Roving wird ein Bündel, Strang oder Multifilamentgarn aus parallel angeordneten Filamenten (Endlosfasern) bezeichnet, der überwiegend in der Fertigung von Faserverbundkunststoffen (FVK) oder faserverstärkten Kunststoffen, einer Untergruppe der Verbundwerkstoffe, verwendet wird. Der Begriff Roving ist aber nicht auf die Verwendung von Faserverbundwerkstoffen, wie Kohlefaser, beschränkt. Vielmehr sind auch darunter gemischte Verbünde zu verstehen, die beispielsweise Silikonfasern, Keramikfasern oder auch Fasern aus anderen Werkstoffen umfassen.

Ein Gelege ist ein Flächengebilde, das aus einer oder mehreren Lagen von parallel verlaufenden, gestreckten Fäden bzw. Rovings besteht. An den Kreuzungspunkten werden die Fäden üblicherweise fixiert. Die Fixierung erfolgt entweder durch Stoffschluss oder mechanisch durch Reibung und/oder Formschluss. Es existieren folgende Arten von Fadengelegen:
- monoaxiale oder unidirektionale, die durch das Fixieren einer Schar von parallelen Fäden entstehen
- biaxiale, bei denen zwei Scharen von parallelen Fäden in Richtung von zwei Achsen fixiert werden
- multiaxial: mehrere Scharen aus parallelen Fäden werden in Richtung verschiedener Achsen fixiert.

Die Fadenlagen bei mehrlagigen Gelegen können alle unterschiedliche Orientierungen aufweisen, auch aus unterschiedlichen Fadendichten und unterschiedlichen Fadenfeinheiten bestehen. Im Gegensatz zu Geweben haben Gelege als Verstärkungsstrukturen in Faser-Kunststoff-Verbunden bessere mechanische Eigenschaften, da die Fäden in gestreckter Form vorliegen und damit keine zusätzliche Strukturdehnung vorliegt und die Ausrichtung der Fäden speziell für den jeweiligen Anwendungsfall definiert werden kann. Aufgrund dieser gestreckten Form wird ein Gelege im englischen Sprachraum und auch im internationalen Handel als non-crimp fabric (NCF) bezeichnet.

Stricken ist die Herstellung von Maschen mit Hilfe eines oder mehrerer Fäden oder Garne oder Filamente sowie zweier oder mehrerer Nadeln. Der Faden wird dazu auf der Nadel mit sich selbst verschlungen. Gestricke sind im Vergleich mit Geweben dicker, schwerer, wärmeisolierender und durchsichtiger.

Gewebe ist der Oberbegriff für manuell oder maschinell gefertigte Erzeugnisse der Weberei wie Tuch, Samt, Velours, Plüsch, Frottee und sonstige textile Flächengebilde aus mindestens zwei rechtwinklig oder nahezu rechtwinklig verkreuzten Fadensystemen. Die Fäden in Längsrichtung heißen Kette oder Kettfäden. Die Querfäden heißen Schuss oder Schussfäden. Verbunden sind die Fäden durch die Verbindungsart Fadenverkreuzung. Fadenverkreuzung bedeutet nicht, dass Fäden kreuzend aufeinander liegen, sondern dass Fäden in einem bestimmten Rhythmus (der Bindung genannt wird) über und unter den querliegenden Fäden durchgehen. Damit ein Gewebe ausreichend schiebefest ist, müssen die Kett- und Schussfäden meistens relativ dicht gewebt werden. Deshalb weisen die Gewebe bis auf wenige Ausnahmen auch ein geschlossenes Warenbild auf.

In der nachfolgenden Beschreibung wird der Formteil in Verbindung mit bauchartig und schlaufenartig verwendet. Unter dem Begriff Formteil wird eine zwei- oder dreidimensionale Form verstanden, die durch einen oder mehrere Rovings gebildet wird. Die Form dabei sieht vor, dass die schnurartige Ausbildung des Rovings beispielsweise in einer zweidimensionalen Ebene erfolgt, in dem ausgehend von einem Anfang zunächst eine Schlaufe gelegt wird. Diese Schlaufe, die eine Fläche einschliesst, bildet das Formteil. Die Schlaufe wird weitergeführt und wird nach einem imaginären Punkt (Richtungsumkehrpunkt) gegenläufig geführt, so dass gegenüberliegend wieder eine Schlaufe entsteht. Deren Ende wird wieder zurückgeführt zu einem neuen Richtungsumkehrpunkt, und die Schlaufe auf der anderen Seite wird gelegt. So geht dies weiter, so dass ein sehr einfaches Gelege entsteht, bei dem die Richtungsumkehrpunkte auf einer Linie (hier Mittelachse der Vorrichtung) liegen. Zielführend ist ein Formteil, das eine Fläche einschliesst (hier bauchartig, kann aber auch anders geometrisch gestaltet sein), die zur Anlage auf der Aussenwandung des Körpers gelangt. Zielführend ist ferner, wenn der Roving ohne Unterbruch von dem einen Formteil zum anderen Formteil geführt wird (vergleichbar mit einem Faden beim Stricken oder Weben).

### Stand der Technik

Um ein Fachwerk aus Körpern, insbesondere Rohren zu bilden, ist es notwendig an den jeweiligen Stossstellen, an dem beispielsweise das freie Ende des einen Rohres auf die Aussenwandung des anderen Rohres trifft, mit einem Verbindungselement zu versehen, wenn die beiden Rohre nicht durch eine thermische Verbindung, wie beispielsweise durch Schweissen miteinander verbindbar sind.

Bestehen die Körper aus Kohlefaserverbundwerkstoffen, so ist ein thermisches Verbinden nicht möglich.

Hierzu werden in Abhängigkeit der Formgestaltung der Körper und auch der vorgesehenen Winkelanordnung zueinander Formteile bereitgestellt, die eine entsprechende Verbindung ermöglichen. Die Fixierung der Körper in den Formteilen kann durch Klemmen, Schrauben, Kleben oder durch sonstige gleichwertige kraftschlüssige Verbindungsarten erfolgen. Die Formteile können aus unterschiedlichen Materialien bestehen.

Ein weiteres alternatives Verfahren, bekannt aus der US 8,266,788 B2, besteht darin, durch vorgeformte Adapterelemente, die im Querschnitt U-förmig ausgebildet sind, an die jeweiligen freien Enden der Körper, schlaufenartige Ausbildungen anzufügen. Durch diese schlaufenartigen Ausbildungen werden Filamente geführt, die mit dem weiteren Körper in Verbindung treten und diesen umschlingen. Die Verbindung ist zusätzlich zu laminieren. Dadurch kann ein fachwerkartiger Verbund von Kohlefaserverbundwerkstoffen entstehen, wobei die Winkel zueinander je nach Bedarf zuvor ausgerichtet werden können.

Aus der DE 42 38 982 A1 ist ein Auskleideschlauch, der mit flüssigem, aushärtbarem Harz tränkbar ist, bekannt. Dieser wird bis zur Harzaushärtung an die Innenwand des Altkanals oder der Altrohrleitung gepresst, derart, dass mit ihm in einfacher Weise auch Rohrleitungen und Kanäle in Form einer Innenauskleidung saniert werden können, die mindestens einen Bereich aufweisen, in dem eine sprunghafte Änderung der lichten Weite des Rohr- oder Kanalstranges vorliegt, wobei der Auskleideschlauch mit geringen Verformungskräften der jeweiligen Rohrgeometrie angepasst werden kann. Der Auskleideschlauch wird aus einem textilen Fasergebilde, vorzugsweise aus einem Glasfasergestrick gefertigt und weist mindestens einen Abschnitt auf, in dem die Dehnbarkeit in radialer Richtung wesentlich grösser ist als in dem anderen Schlauchteil und bei dem die Dehnbarkeit in Längsrichtung klein ist. Der Auskleideschlauch wird zum Sanieren von verlegten Rohrleitungen oder Abwasserkanälen verwendet.

Aus der US 2011/0265303 A1 ist ein System zum Verbinden von rohrförmigen Elementen bekannt. Dieses besteht aus einem U-förmiges Verbindungselement mit einem ersten Schenkel und einem zweiten Schenkel, wobei ein U-Element den ersten und den zweiten Schenkel miteinander verbindet. Dabei sind die Schenkel derart ausgebildet, dass diese zu den freien Enden verjüngt gestaltet sind, wobei die Querschnittsfläche der jeweiligen Schenkel an den freien Enden minimal und im Bereich des U-Elements maximal ist. Um zwei nicht achsparallele Rohe miteinander zu verbinden, wird das U-förmige Element um das erste Rohr gelegt, derart, dass dieses Verbindungselement sich senkrecht zur Längserstreckung des Rohres anordnet. Die freien Schenkel legen sich dabei auf die Aussenwandung des zweiten Rohres, das in einem Winkel zum ersten Rohr angeordnet ist. Ein Draht, der aus anisotropem Material hergestellt ist, ist so konfiguriert, dass dieser um den ersten Schenkel, den zweiten Schenkel und einen Abschnitt des zweiten Rohres gewickelt ist und dabei die Schenkel fest an das Rohr presst. Dadurch entsteht eine Verbindung zwischen einem ersten und einem zweiten Rohr, die nicht achsparallel verlaufen.

Aus der DE 44 23 642 ist ein Tragrahmen in Fachwerkbauweise bekannt, insbesondere für ein Kraftfahrzeug, welcher aus separat vorgefertigten Rahmenprofilteilen und diese formsteif miteinander verbindenden Knotenstellen aus Faserverbundwerkstoff besteht. Dieser ist auf kostengünstige, last- und faserverbundgerechte Weise derart ausgebildet, dass die Knotenstellen jeweils aus mechanisiert vorgefertigten Faser-Vorformlingen mit einer dreidimensional durchlaufenden Faserstruktur und Aufnahmetaschen für die zugehörigen Rahmenprofilteile hergestellt und die Faservorformlinge jeweils einzeln mit in die Aufnahmetaschen eingesetzten Rahmenprofilteilen in einem den Knotenbereich umschliessenden und die Rahmenprofilteile lagegenau fixierenden Formwerkzeug zu einer integralen Faserverbund-Knotenstruktur verdichtet und konsolidiert sind.

### Nachteile des Standes der Technik

Einer der Nachteile des Standes der Technik besteht darin, dass die Verbindungsbereiche der jeweiligen Körper insbesondere bei den Ausführungen mit den Verbindungselementen überdimensioniert sind, da diese nur mit hohen Aufwendungen berechenbar sind. Aufgrund von technischen Gegebenheiten lassen sich aber solche Verbindungselemente oft nicht realisieren.

Die Ausführung gemäss der US 8,266,788 B2 hat den Nachteil, dass ebenfalls Formteile vorgefertigt werden müssen, die dann in einem weiteren Schritt an das Ende des jeweiligen Körpers, an dessen Anlenkungsstelle, angebracht und laminiert werden müssen. Aufgrund der komplexen Anordnung lässt sich eine genaue Berechnung oft nicht realisieren.

Ein Nachteil der Ausführung gemäss der US 2011/0265303 A1 besteht darin, dass nur eine rechtwinklige Zuordnung der beiden Rohrelemente zueinander möglich ist. Zudem ist die Torsionssteifigkeit sehr gering. An den Verbindungsstellen der beiden Rohrelemente entstehen Spannungsspitzen.

### Aufgabe der Erfindung

Aufgabe der Erfindung ist es, eine Vorrichtung und ein Verfahren bereitzustellen, durch das insbesondere für mindestens zwei Körper aus Kohlefaserverbundwerkstoffen eine vorberechenbare dimensionierte Konnektierung zu einem kraftschlüssigen Verbund möglich ist.

### Lösung der Aufgabe

Die Lösung der Aufgabe wird durch die Merkmale von Anspruch 1 oder die Merkmale von Anspruch 9 bereitgestellt.

Der Grundgedanke der Erfindung besteht darin, die Verbindungsstelle von zwei Körpern, beispielsweise das freie Ende des einen als Rohr ausgebildeten Körpers aufsetzend auf die Aussenwandung des anderen ebenfalls als Rohr ausgebildeten Körpers mit einem Roving-Gelege, -Gewebe oder -Gestrick, entweder direkt an der Verbindung hergestellt oder als Faser-Matrix- Halbzeug (beispielsweise als Prepreg (preimpregnated fibers; vorimprägnierte Faser) zu versehen und dort zu laminieren, so dass eine kraftschlüssige Verbindung entsteht. Dabei weist die Vorrichtung Formteile auf, die von den Rovings gebildet sind und vorzugsweise schlaufenartig ausgebildet sind. Diese Formteile legen sich an die Oberflächen der jeweiligen Körper im Bereich der Verbindungsstelle und werden dort durch ein Laminat fixiert. Die Vorrichtung ist abhängig von dem jeweiligen Lastfall an der Verbindungsstelle, zuvor berechenbar und damit hinsichtlich Anzahl der Filamente und der Wahl des Werkstoffs zuvor bestimmbar.

### Vorteile der Erfindung

Einer der wesentlichen Vorteile der Erfindung besteht darin, dass durch die jeweils an den Belastungsfall angepasste Vorrichtung eine Verbindung zwischen zwei Körpern, die miteinander kraftschlüssig verbunden werden sollen, geschaffen werden kann, derart berechnet werden kann, so dass ein homogener Kraftverlauf zwischen den verbundenen Körpern entsteht und Berücksichtigung einer entsprechenden Belastung der Verbindung sowie einen geringen Verbrauch von Rovingmaterial.

Dies wird dadurch erreicht, dass ein in sich geschlossenes Gewebe, Gestrick oder Gelege zum einen das freie Ende des einen Körpers und die Aussenwandung des anderen zu verbindenden Körpers überdeckt und dort laminiert werden kann. Das Gewebe, Gestrick oder Gelege besteht dabei aus mehreren Formteilen, vorzugweise derart, dass alle Formteile identisch und miteinander verbunden sind.

Dabei ist das Gewebe, Gestrick oder Gelege in sich in mehrere in Draufsicht als "Acht" gebildete Schlingen gelegt, die den Umfang des jeweils einen Körpers überdeckt und gleichzeitig auf dem Aussenumfang des anderen Körpers zur Anlage kommt und dort eine Verbindung eingeht.

Die Formteile sind jedoch nicht an die Form der liegenden Acht gebunden. Vielmehr sind alle die Formen geeignet, die einen mechanisch homogenen Kraftfluss ermöglichen. Dabei sind auch ovale miteinander verkettete Formen beispielsweise denkbar. Um dieses Formteil zu bilden, wird entweder maschinell oder von Hand ein Endlosroving gelegt oder mit einem Strickverfahren, beispielsweise dem Jaquard Webverfahren, verarbeitet.

Ziel dabei ist es, eine Mittelachse - zumindest imaginär - zu erzeugen, auf der die jeweiligen Richtungswechselpunkte des Rovings angeordnet sind, so dass sich die vorzugsweise bauchigen bzw. schlaufenartigen Ausbildungen von der Mittelachse wegerstrecken können und die freien Enden dann im Bereich der Mittelachse zusammengeführt werden. Beginnend mit dem bauchigen Formteil ausgehend von der Mittelachse wird der Roving zurück zum Ausgangspunkt geführt, kreuzt den Ausgangspunkt, bildet dort einen Richtungswechselpunkt und führt dann zur weiteren bauchigen Ausbildung auf der anderen Seite der Mittelachse. Auch hier wird der Roving nach der bauchigen schlaufenartigen Ausbildung als Formteil wiederum zurück zur Mittelachse geführt. Ein neuer Richtungswechselpunkt entsteht, versetzt nun zum vorherigen Richtungswechselpunkt. Von hier aus ausgehend beginnt wieder ein Formteil, wobei das schlaufenartige bauchige Formteil zumindest teilweise über das vorherige gelegt wird. Auch hier findet dann wieder eine Rückführung zur Mittelachse zum neuen Richtungswechselpunkt statt. Dieser Vorgang wird beliebig oft wiederholt, bis eine Vorrichtung entstehen, die langgestreckt ist und ein Anfang und ein Ende aufweist. In Draufsicht sehen zwei Formteile, die sich von der Mittelachse wegerstrecken, wie eine liegende Acht (Zahl 8) aus.

Um die Vorrichtung zum Verbinden von zwei Körpern fertigzustellen, wird der Anfang und das Ende der Vorrichtung miteinander verbunden, so dass ein Ringelement entsteht. Der Anfang und das Ende werden miteinander verstrickt oder verklebt oder durch ein Laminat miteinander verbunden.

Aufgrund der maschenartigen Gestaltung der Vorrichtung als Gewebe, Gestrick oder Gelege ist die Vorrichtung dehnbar. Auch als Ringelement kann der Innendurchmesser verändert werden, so dass die Vorrichtung problemlos über einen Körper, beispielsweise ein Rohr gestülpt werden kann. An der notwendigen Position wird die Dehnung aufgehoben, in dem man das Ringelement loslässt. Der Innendurchmesser wird kleiner und damit fügt sich die Vorrichtung an die Körper an.

Eine bevorzugte Lage der Vorrichtung sieht vor, dass die Mittelachse in der Kehlnaht zwischen den beiden Körpern zur Anlage kommt. Dies bringt den Vorteil, dass sich so die Formteile von der einen Seite der Mittelachse an die Oberfläche des ersten Körpers und die Formteile, die sich auf die andere Seite der Mittelachse erstrecken, an die Oberfläche des zweiten Körpers anlegen können. Durch Laminieren entsteht eine feste Verbindung zwischen der Vorrichtung und den Körpern, die nicht lösbar ist. Sie ist eine Schweissnaht sehr ähnlich.

Das Gewebe, Gestrick oder Gelege kann mit einem Verlegewerkzeug in die Kerbe (gelegen im Bereich der Verbindung zwischen den zu verbindenden Körpern) eingedrückt werden, dass das Gewebe, Gestrick oder Gelege sich aufgrund seiner Biegesteifigkeit an die Taille anlegt, derart, dass die geplanten (und zuvor auch vorteilhafterweise berechneten) Krümmungskorridore eingehalten werden. Dadurch bleiben die Festigkeit zwischen den Körpern und damit auch die Verbindung vollständig erhalten. Formteile in Form von sich übereinanderlegenden Achten können durch eine maximale Anzahl von Verbindungsfäden, die sich durch ihre Eigensteifigkeit in die Fügefuge und die angrenzenden Strukturflächen anschmiegen, eine gewichtsoptimale feste Verbindung zwischen den zu verbindenden Strukturen ähnlich einer Schweissnaht erzeugen. Dabei wird die eingebrachte Krümmung der 8-Form der Formteile nicht verändert und es entstehen keine scharfen Umlenkungen der Fasern, so dass sie ihre, dieser Krümmung entsprechende maximale Festigkeit, erhalten.

Die Herstellung der ,Rovingachterschleifen' kann durch verschiedene Verfahren bekannt unter Taylor fiber placement oder mit Webtechnik (beispielsweise Jaquard) erfolgen und auch als Prepreg vorbereitet werden.

Das Gewebe, Gestrick oder Gelege kann je nach Einsatzgebiet und Belastung der zu verbindenden Körper berechnet werden, so dass die Anzahl der Rovinge, der Durchmesser des Gewebe, Gestrick oder Gelege und beispielsweise auch die Anzahl der liegenden "Achten" ausgelegt werden kann.

Damit kann ein für den jeweiligen Belastungsfall vorberechnetes und vorgefertigtes Verbindungselement als Vorrichtung bereitgestellt werden. Dieses Verbindungselement ist sehr einfach handzuhaben und auch anzubringen, so dass die Verbindung fachmännisch einfach herstellbar ist. Zudem kann von einer hohen Belastungsqualität ausgegangen werden. Dies bedeutet, dass die Berechnung sehr nahe an der tatsächlichen Belastung bestimmt und berechnet werden kann, so dass keine überdimensionale Verbindung entstehen kann.

Ein weiterer Vorteil besteht darin, dass die Verbindung auf diese Weise aus gleichen Materialien besteht, so dass beispielsweise bei verschiedenen Umgebungstemperaturen keine Verspannungen zwischen den Körpern und Verbindungselementen entstehen.

Je nach gewünschter und berechneter Steifigkeit der zu verbindenden Körper können unterschiedliche Gewebe, Gestrick oder Gelege übereinander angeordnet werden.

Eine vorteilhafte Ausführung sieht vor, dass in dem Bereich der Kerbe (gelegen im Bereich der Verbindung zwischen den zu verbindenden Körpern) in der Dimension kleine Achten anzuordnen sind. Nach aussen - weg von der Kerbe - können anschliessend grössere Achten gelegt werden, so dass vergleichbar mit einer klassischen Schweissnaht, eine dicke Schweissverbindung entsteht.

Die Berechnung der Verbindung von Faserverbunden wird vorzugsweise mit Hilfe der Finite-Elemente-Methode realisiert. Dabei wird jeder Roving des Gewebes, Gestricks oder Geleges in seiner geodätischen Raumlage einzeln abgebildet und in seiner Wirkung als Zug- und Druckstab sowie als Biege- und Torsionsstab sowie sein kinematisches Verhalten in der Matrixbettung berechnet. Dadurch können in Abhängigkeit von der tatsächlich wirkenden Belastung optimierte Verbindungen zwischen den Körpern ausgebildet werden. Da die Gewebe, Gestrick oder Gelege nach der Berechnung ausgebildet werden, besteht die Möglichkeit, diese vorzuproduzieren und nach Bedarf mit einem Verlegewerkzeug anzubringen.

Ein Vergleich mit klassischen Wickelgeometrien zeigt die exzellente Tragfähigkeit dieser Verbindungstechnologie, die zum einen die Spannungen in den angrenzenden Strukturteilen absenkt und die Faserbelastung selbst reduziert, wobei dazu nur ein Viertel der Rovingmenge eingesetzt werden muss.

Auf diese Weise lassen sich beispielsweise bei Tretlagern von Fahrrädern die auf das Tretlagergehäuse führenden Rohre kraftschlüssig miteinander verbinden.

Weitere vorteilhafte Ausgestaltungen gehen aus der nachfolgenden Beschreibung hervor.

### Zeichnung

Es zeigt:
- Fig. 1: eine perspektivische Ansicht auf die erfindungsgemässe Vorrichtung zur Herstellung einer Verbindung von zwei Körpern;
- Fig. 2 [A-C]: eine prinzipielle Darstellung der Herstellung von Formteilen für die Vorrichtung;
- Fig. 3: eine perspektivische Ansicht auf die erfindungsgemässe Vorrichtung zur Herstellung einer Verbindung von zwei Körpern , wobei die Formteile unterschiedliche Grössen aufweisen;
- Fig. 4: eine prinzipielle Teil-Darstellung einer Vorrichtung in Jaquard Webtechnik.

### Beschreibung eines Ausführungsbeispiels

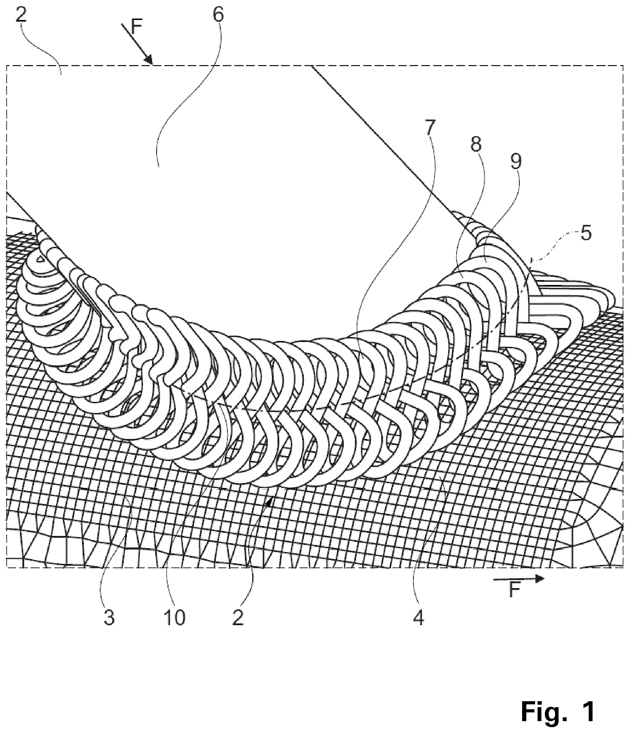

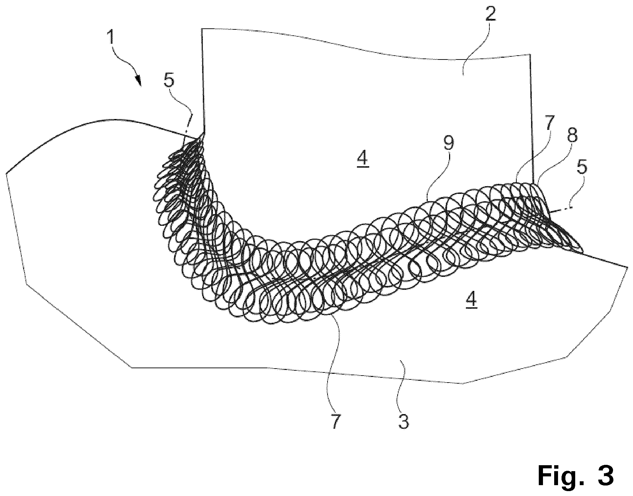

In Fig. 1 und Fig. 3 ist die erfindungsgemässe Vorrichtung 1 dargestellt. Diese Vorrichtung 1 dient dazu, einen homogenen Kraftfluss F bei zwei verbundenen Körpern 2, 3, einen ersten Körper 2 und einen zweiten Körper 3, bereitzustellen.

Der erste Körper 2 ist bei dem hier dargestellten Ausführungsbeispiel ein Rohr, das aus einem Kohlefaserverbundwerkstoff besteht. Es soll in einem Winkel ungleich null (also nicht parallel und/oder innen- und/oder aussenliegend) mit dem zweiten Körper 3 kraftschlüssig verbunden werden, wobei der erste Körper 2 auf der Aussenwandung 4 des zweiten Körpers 3 aufsetzt.

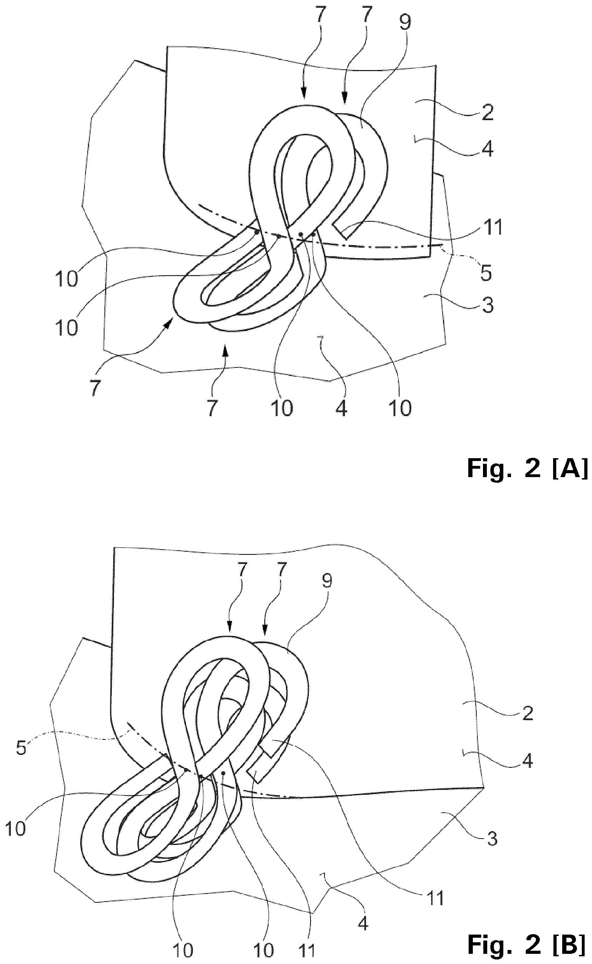

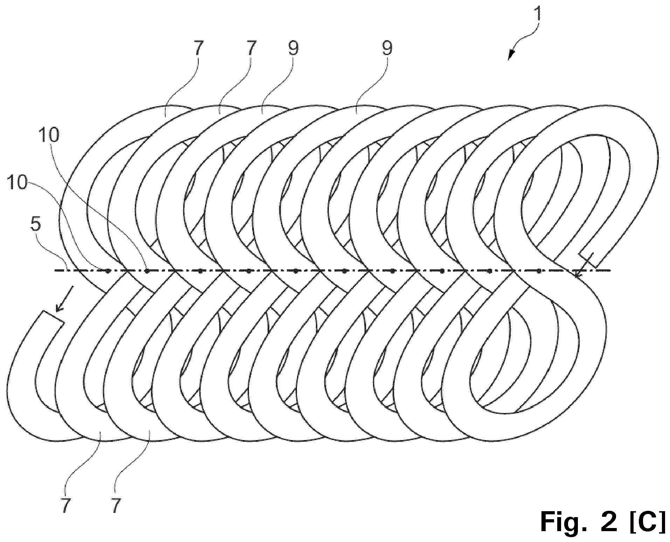

Die Herstellung einer solchen Vorrichtung ist in den Fig. 2 bis 4 schematisch erläutert:
Zunächst ist eine Mittelachse 5 - zumindest imaginär - zu erzeugen, auf der die jeweiligen Richtungswechselpunkte 10 des Rovings 9 angeordnet sind, so dass sich die vorzugsweise bauchigen bzw. schlaufenartigen Ausbildungen als Formteile 7 von der Mittelachse 5 wegerstrecken können und die freien Enden 11 dann im Bereich der Mittelachse 5 zusammengeführt werden. Richtungswechselpunkte 10 sind solche imaginäre Stellen, an denen die Legerichtung der Rovings geändert wird, um einstückig zu bleiben, aber auf der gegenüberliegenden Seite ebenfalls ein Formteil 7 zu legen.

Beginnend mit dem bauchigen Formteil 7 ausgehend von der Mittelachse 5 wird der Roving 9 zurück zum Ausgangspunkt geführt, kreuzt den Ausgangspunkt, bildet dort einen Richtungswechselpunkt 10 und führt dann zur weiteren bauchigen Ausbildung als neues Formteil 7 auf der anderen Seite der Mittelachse 5. Auch hier wird der Roving 9 nach der bauchigen schlaufenartigen Ausbildung als Formteil 7 wiederum zurück zur Mittelachse 5 geführt. Ein neuer Richtungswechselpunkt 10 entsteht, versetzt nun zum vorherigen Richtungswechselpunkt 10. Von hier aus ausgehend beginnt wieder ein Formteil 7, wobei das schlaufenartige bauchige Formteil 7 zumindest teilweise über das vorherige gelegt wird (Fig. 2[A]). Auch hier findet dann wieder eine Rückführung zur Mittelachse 5 zum neuen Richtungswechselpunkt 10 statt. Dieser Vorgang wird beliebig oft wiederholt, bis eine Vorrichtung 1 entsteht, die langgestreckt ist und ein Anfang und ein Ende aufweist. In Draufsicht sehen zwei Formteile, die sich von der Mittelachse wegerstrecken, wie eine liegende Acht (Zahl 8) aus (Fig. 2[C]).

In Fig. 2[B] ist schematisch eine zweite Vorrichtung angedeutet, die über der ersten Vorrichtung angeordnet ist. Vorzugsweise ist vorgesehen, die bauchigen schlaufenartigen Formteile 7 grösser oder kleiner zu gestalten, damit keine vollständige Überdeckung stattfindet. Bei diesem Ausführungsbeispiel findet keine Verkettung der beiden Vorrichtungen statt. Vielmehr wird dies durch Laminieren erreicht.

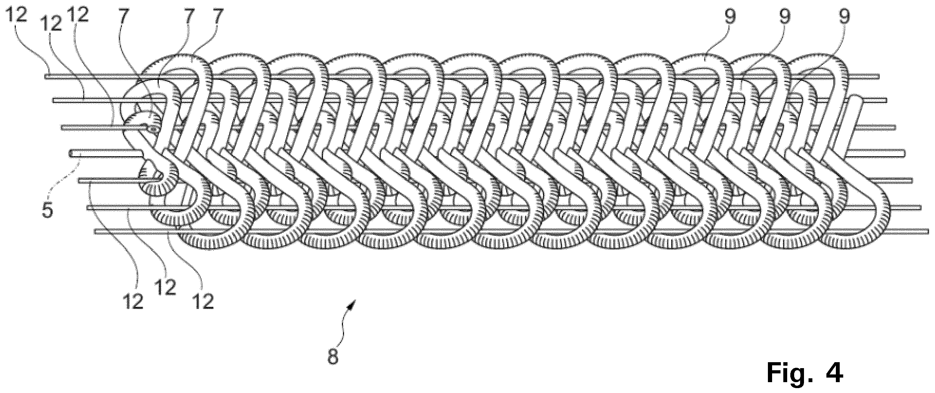

In Fig. 4 ist eine Vorrichtung 1 gezeigt, die ebenfalls eine Mittelachse 5 aufweist. Diese Mittelachse 5 ist ein Faden oder ein Roving. Ferner sind weitere Stützfäden 12 vorgesehen, die parallel zu der Mittelachse 5 ausgerichtet sind. In einem sogenannten Jaquard-Webevefahren wird eine Vorrichtung 1 bereitgestellt, die in Richtung ihrer Längserstreckung wechselweise unterschiedlich grosse Formteile 7 aufweist. Dabei wird zunächst ein Formteil 7 geschaffen, das die unmittelbar zur Mittelachse 5 nächsten Stützfäden 12 umfasst. Derselbe Roving wird dann - wie zuvor auch beschrieben - zu einem weiteren Formteil 7 geführt, das jedoch, vergleichbar mit dem vorherigen Formteil 7 eine grössere bauchige schlaufenartige Form aufweist und den weiter beabstandeten Stützfaden 12 umschlingt. Bei dem hier dargestellten Ausführungsbeispiel sind drei unterschiedliche Formteile 7 vorgesehen, die sich sequenziell abwechseln. Dadurch kann -vergleichbar mit einer Schweissnaht - ein spannungsarmer Übergang zwischen den beiden zu verbindenden Körpern 2, 3 erreicht werden.

Um die Vorrichtung zum Verbinden von zwei Körpern fertigzustellen, wird der Anfang und das Ende der Vorrichtung 1 miteinander verbunden, so dass ein Ringelement entsteht. Der Anfang und das Ende werden miteinander verstrickt oder verklebt oder durch ein Laminat miteinander verbunden, derart, dass die Formteile 7, gebildet durch die Rovings 9, auf den Oberflächen 4 der Körper 2, 3 zur Anlage gelangen. Dabei liegt die Mittelachse 5 der Vorrichtung 1 in dem Verbindungsbereich zwischen den Körpern 2, 3 (Fig. 3).

Die Vorrichtung 1 ist somit ein Gewebe, Gestrick oder Gelege 8 aus einem oder mehreren Rovings 9, die eine Vielzahl von Formteilen 7 aufweist, die sich zumindest teilweise ringförmig um den ersten Körper 2 und an dem weiteren Körper 3 anlegen. Diese Formteile 7 können in Draufsicht gesehen liegende "Achten" sein. Diese liegenden Achten bewirken einen homogenen Kraftverlauf unabhängig von der Kraftrichtung und auch unabhängig von der Ausrichtung der beiden Körper 2, 3 zueinander.

Durch diese Ausgestaltung weist das Gewebe, Gestrick oder Gelege 8 einen Innendurchmesser 6 auf. Das Gewebe, Gestrick oder Gelege 8 ist zumindest teilelastisch (aufgrund der Strickart und der Form der Formteile 7), so dass es nach dem Überstülpen (der Innendurchmesser 6 wird von dem Körper 2 durchdrungen) über das freie zu verbindende Ende des ersten Körpers 2 in Position verbleibt. Nach dem Aufsetzen auf die Aussenwandung 4 des zweiten Körpers 3 kann die Vorrichtung weiter in Richtung des freien Endes des ersten Körpers 2 abgestriffen werden, derart, dass ein Teil der Vorrichtung 1 auf der Aussenwandung 4 des zweiten Körpers 3 zur Anlage gelangt.

Ist die gewünschte Position erreicht, so kann die Vorrichtung 1 zusammen mit den Körpern 2, 3 laminiert werden. Ein fester homogener kraftschlüssiger und unlösbarer Verbund zwischen dem ersten Körper 2 und dem weiteren Körper 3, die in einem Winkel ungleich null zueinander angeordnet sind, ist entstanden.

Das Gewebe, Gestrick oder Gelege 8 kann zuvor mit einer Finite-Elemente-Methode berechnet werden, so dass es für die angenommenen Belastungsfälle ausreichend dimensioniert ist. Eine Vorfertigung (prepreg) ist möglich. Eine Serienfertigung mit gleichbleibender Fertigungsqualität ist auf eine sehr einfache Weise möglich geworden.

### BEZUGSZEICHENLISTE

### Roving-Gewebe, -Gestrick oder -Gelege für eine kraftschlüssige Verbindung von mindestens zwei Körpern sowie Verfahren zu dessen Herstellung

- 1: Vorrichtung
- 2: Körper
- 3: Körper
- 4: Aussenwandung
- 5: Mittelachse
- 6: Innendurchmesser
- 7: Formteile
- 8: Gewebe, Gestrick oder Gelege
- 9: Roving
- 10: Richtungswechselpunkt
- 11: freien Enden
- 12: Stützfaden
- F: Kraftschluss

## Patentansprüche

1. Vorrichtung zur kraftschlüssigen Verbindung von mindestens zwei Körpern, wobei die Körper in einem Winkel ungleich null zueinander angeordnet, wobei Rovings durch entsprechende Anordnung einen Kraftverlauf von einem Körper zum anderen ermöglichen, **dadurch gekennzeichnet, dass** die Vorrichtung (1) ein Gewebe, Gestrick oder Gelege (8) aus Rovings (9) ist, die lang gestreckt ist und eine Mittelachse (5) aufweist, wobei sich von der Mittelachse (5) Formteile (7) wegerstrecken und die Formteile (7) durch Anordnung der Rovings (9) gebildet sind, derart dass diese zumindest einen schlaufenartigen bauchigen Bereich aufweisen, der jeweils zur Anlage an die Oberfläche (4) der Körper (2, 3) vorgesehen ist und die jeweiligen Formteile zur Kraftübertragung kraftschlüssig miteinander verbunden sind.

2. Vorrichtung nach Anspruch 1, **dadurch gekennzeichnet, dass** die Formteile (7) zumindest teilweise übereinander oder untereinander angeordnet sind.

3. Vorrichtung nach Anspruch 1 oder 2, **dadurch gekennzeichnet, dass** die Mittelachse (5) durch das zentrale Zusammenführen zu einem Richtungswechselpunkt (10) der schlaufenartigen Formteile (7) imaginär gebildet ist.

4. Vorrichtung nach einem der vorhergehenden Ansprüche, **dadurch gekennzeichnet, dass** die Vorrichtung (1) zu einem Ringelement ausgebildet ist und so einen Innendurchmesser (6) aufweist.

5. Vorrichtung nach einem der vorhergehenden Ansprüche, **dadurch gekennzeichnet, dass** die Vorrichtung (1) aus einem durchgehenden nicht unterbrochenen Roving (9) gebildet ist.

6. Vorrichtung nach einem der vorhergehenden Ansprüche, **dadurch gekennzeichnet, dass** mehrere Vorrichtungen (1) übereinander angeordnet sind und so eine neue Vorrichtung bilden.

7. Vorrichtung nach Anspruch 5, **dadurch gekennzeichnet, dass** die Formteile (7) der jeweiligen Vorrichtungen (1) sich hinsichtlich der Grösse unterscheiden.

8. Vorrichtung nach einem der vorhergehenden Ansprüche, **dadurch gekennzeichnet, dass** die jeweiligen Formteile (7) die Form einer in einer Ebene liegenden "Acht" sind.

9. Verfahren zur Herstellung einer Vorrichtung zur kraftschlüssigen Verbindung von mindestens zwei Körpern, wobei die Körper in einem Winkel ungleich null zueinander angeordnet, wobei Rovings durch entsprechende Anordnung einen Kraftverlauf von einem Körper zum anderen ermöglichen, **dadurch gekennzeichnet, dass** die Vorrichtung (1) ein Gewebe aus Rovings (9) ist, das lang gestreckt ist und eine Mittelachse (5) aufweist, wobei die Formteile (7) durch Anordnung der Rovings (9) gebildet sind, derart dass diese sich von der Mittelachse (5) schlaufenartig wegerstrecken und die Rovings (9) mittels der Jaquard Webtechnik das Gewebe bilden.
